(19) Europäisches Patentamt

European Patent Office

Office européen des brevets

(11) **EP 3 292 795 B1**

(12) **EUROPEAN PATENT SPECIFICATION**

(45) Date of publication and mention
of the grant of the patent:
**18.12.2019 Bulletin 2019/51**

(51) Int Cl.:
***A47C 23/00*** *(2006.01)*  ***B29C 67/00*** *(2017.01)*

(21) Application number: **17190082.2**

(22) Date of filing: **08.09.2017**

(54) **USE OF AN ELASTIC POLYMER FOR PRODUCTION OF A POROUS BODY IN AN ADDITIVE MANUFACTURING METHOD**

VERWENDUNG EINES ELASTISCHEN POLYMERS ZUR HERSTELLUNG EINES PORÖSEN KÖRPERS IN EINEM VERFAHREN ZUR GENERATIVEN FERTIGUNG

UTILISATION D'UN POLYMÈRE ÉLASTIQUE POUR LA PRODUCTION D'UN CORPS POREUX DANS UN PROCÉDÉ DE FABRICATION ADDITIVE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.09.2016 EP 16188555**

(43) Date of publication of application:
**14.03.2018 Bulletin 2018/11**

(73) Proprietor: **Covestro Deutschland AG
51373 Leverkusen (DE)**

(72) Inventors:
• **ACHTEN, Dirk
51375 Leverkusen (DE)**
• **BÜSGEN, Thomas
51063 Köln (DE)**
• **DEGIORGIO, Nicolas
47807 Krefeld (DE)**
• **AKBAS, Levent
58455 Witten (DE)**
• **WAGNER, Roland
51375 Leverkusen (DE)**
• **REICHERT, Peter
41541 Dormagen (DE)**
• **HÄTTIG, Jürgen
51519 Odenthal (DE)**

(74) Representative: **Levpat
c/o Covestro AG
Alfred-Nobel-Straße 10
40789 Monheim am Rhein (DE)**

(56) References cited:
**WO-A1-2015/120429 WO-A1-2015/197515
DE-A1-102010 040 261 DE-B3-102015 100 816**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to the use of an elastic polymer for production of a porous body, wherein the body comprises a three-dimensional network of node points connected to one another by struts and a void volume present between the struts. The body is a mattress.

Mattresses of this kind typically consist of foam materials, and the mattresses may especially consist of multiple superposed foam layers. In order to increase the lying comfort of such mattresses, it is customary to undertake what is called zoning in mattresses. Zoning of this kind forms zones with different elastic properties, i.e. different degrees of yielding, distributed over the area of the mattress. This takes account of the fact that a mattress should have a different degree of yielding in the leg region, for example, than in the back region. Formation of zoning of this kind in multilayer mattresses is typically accomplished by incorporating cavities in a localized manner into a middle mattress layer with oscillating blades. On the upper and lower sides of this middle mattress layer, fully continuous upper and lower mattress layers are then applied in each case.

DE 10 2015 100 816 B3 discloses a process for producing a body-supporting element formed by a mattress, a cushion, a seat or part of a seat, comprising the process steps of defining print data which form a person-specific three-dimensional support structure and the production of the body-supporting element using the print data by means of a 3D printer. With the print data, it is possible to produce regions of different elasticity through the formation of cavities of different sizes and/or different number by means of the 3D printer.

It is stated that, in the process according to DE 10 2015 100 816 B3, production of the body-supporting element can be accomplished using elastic materials which, in the printing process conducted with the 3D printer, are mixed with a binder. Elastic materials used may be elastomeric materials, especially plastics. The 3D printer may have spraying means, in which case elastic materials are sprayed from first spraying means and binder from second spraying means. The elastic materials may be in powder form.

DE 10 2015 100 816 B3 does not make any statements as to whether the elastomeric material forms a porous body. It is stated that, by means of the 3D printer, depending on the print data, regions of different elasticity of the body-supporting element are generated through the formation of cavities of different sizes and/or different number. In order to obtain a three-dimensional variation of the elasticity of the mattress 3, it is possible to incorporate cavities in a controlled manner at particular sites in the mattress in the 3D printer. A void volume at a particular site is generated by not spraying any binder via the second spraying means, such that the elastomeric material sprayed via the first spraying means cannot bond there with the binder to form a material structure. Alternatively, it is also possible for no elastomeric material to be sprayed via the first spraying means, such that there is no wastage of powder elastomeric material.

DE 10 2015 100 816 B3 states that the cavities generated with the 3D printer can have any desired geometries, and these may especially take the form of inclusions that may be surrounded on all sides by the material structure of the mattress. In addition, it is stated that the cavities can be generated in different sizes, and it is especially also possible here for very small cavities to be generated, which means that particularly high spatial resolution of the variation in the elastic properties of the mattresses is to be achieved.

Traditionally, flexible polyurethane foams are used in large volumes for the production of mattresses, cushions and the like, which is documented in numerous patent and non-patent publications. By contrast, reports relating to materials that could be characterized as foams produced by additive methods are less common.

The publication by Maiti, A. et al. "3D printed cellular solid outperforms traditional stochastic foam in long-term mechanical response", Sci. Rep. 6, 24871; doi: 10.1038/srep24871 (2016) describes materials formed from polydimethylsiloxane elastomer (PDMS) that are produced by means of the direct ink writing method. The material was built up layer by layer, with each layer composed of equally spaced PDMS cylinders of diameter 250 $\mu$m.

WO 2012/028747 A1 relates to a process for producing a three-dimensional object from a construction material by an additive layer construction method, in which, proceeding from material characteristics of the construction material and defined properties of the object to be manufactured, an internal structure of the object comprising a grid structure is calculated and the three-dimensional object with this internal structure is produced by the additive layer construction method, such that it has the defined properties.

WO 2015/197515 A1 is concerned with the use of thermoplastic polyurethane powders in powder-based additive manufacturing methods for production of thermoplastic articles.

WO2015/120429A1 relates to a 3D-printed microlattice.

An important criterion for the perception of comfort in a body-supporting element, for example a mattress or cushion, is the extent to which the material of the element permits exchange of air through the element with the surrounding air. Without this exchange of air, it would not be possible either for heat to be removed from the human body, which leads to increased perspiration, or for moist air from perspiration from the human body or from a washing process to be transported away.

The problem addressed by the present invention is that of at least partly overcoming at least one drawback of the prior art. A further problem addressed by the present invention is that of specifying a use of an elastic polymer for production of a porous body suitable for load-bearing for perspiring bodies, where the body permits optimized exchange of air (in order to provide maximum comfort for the perspiring body). A further problem addressed by the invention was that of specifying a use of an elastic polymer for production of a porous body, wherein the body, in terms of its perception of comfort for a user, is comparable to a conventional mattress or cushion. An additional problem addressed by the invention was that of specifying a use of an elastic polymer for production of a porous body, wherein the body is to be produced in a very cost-efficient and/or individualized and/or resource-conserving manner.

According to the invention, at least one of these problems is solved by a use having the features of Claim 1. Advantageous developments are specified in the dependent claims. They can be combined as desired, unless the opposite is clearly apparent from the context.

In the inventive use of an elastic polymer for production of a porous body in an additive manufacturing method, the porous body is a mattress and the porous body comprises a three-dimensional network of node points joined to one another by struts, and a void volume present between the struts, where the struts have an average length of $\geq 200\ \mu$m to $\leq 50$ mm and the struts have an average thickness of $\geq 100\ \mu$m to $\leq 5$ mm.

In the inventive use, moreover, the polymer is an elastomer selected from the following group: thermoset polyurethane elastomers (PUR), thermoplastic copolyamides (TPA), thermoplastic copolyesters (TPC), thermoplastic olefin-based elastomers (TPO), styrene block copolymers (TPS), thermoplastic urethane-based elastomers (TPU), crosslinked thermoplastic olefin-based elastomers (TPV), thermoplastic polyvinyl chloride-based elastomers (PVC), thermoplastic silicone-based elastomers and a combination of at least two of these elastomers. Also possible are combinations of $\geq 3$, $\geq 4$ or $\geq 5$ of these elastomers.

In the context of the present invention, a polymer is elastic when it exhibits an elongation at break in the tensile test according to DIN 53504 of $\geq 50\%$. In that case, the body to be produced may have, for example, a compression set after 40% compression (DIN ISO 815-1) of $\leq 5\%$.

The elastic polymer may also comprise further additives such as fillers, stabilizers and the like, but also further polymers. The total content of additives in the elastic polymer is preferably $\geq 0.1\%$ by weight to $\leq 10\%$ by weight, or more preferably $\geq 1\%$ by weight to $\leq 5\%$ by weight.

The porous body combines the advantages of a conventional mattress or cushion with ventilatability which results from its porous structure and is not achievable in conventional foams.

The porous body can be manufactured in an additive manufacturing method without external support elements in the vertical construction of its structure. By means of an additive manufacturing method, individualized fitting, for example of the cushioning properties of a porous body envisaged as a mattress, is possible. "Individualized" means here that it is possible to produce not just individual pieces, but that it is also possible to adjust the cushioning properties of a support or bearing element at different points as desired and as part of the process. It is thus possible, for example, for a mattress to be created individually for a customer according to anatomical requirements or needs. In order, for example, to achieve an optimal pressure distribution when lying on the mattress, it is first possible to record a pressure profile of the body on a sensor surface and use the data thus obtained for the individualization of the mattress. The data are then sent to the additive manufacturing method in a manner known per se.

The process may be selected, for example, from melt layering (fused filament fabrication, FFF, or fused deposition modelling, FDM), inkjet printing, photopolymer jetting, stereo lithography, selective laser sintering, digital light processing-based additive manufacturing system, continuous liquid interface production, selective laser melting, binder jetting-based additive manufacturing, multijet fusion-based additive manufacturing, high speed sintering process and laminated object modelling. The additive manufacturing method is preferably a sintering method or a melt layering method.

In the context of the present invention, sintering methods are methods which utilize thermoplastic powders in particular in order to build up articles layer by layer. In this context, by means of what is called a coater, thin layers of powder are applied and then selectively melted by means of an energy source. The surrounding powder here supports the component geometry. Complex geometries can thus be manufactured in a more economically viable manner than in the FDM method. Moreover, various articles can be arranged or manufactured in tightly packed form in what is called the powder bed. Owing to these advantages, powder-based additive manufacturing methods are among the most economically viable additive manufacturing methods on the market. They are therefore used predominantly by industrial users. Examples of powder-based additive manufacturing methods are selective laser sintering (SLS) or high-speed sintering (HSS). They differ from one another in the method of introducing the energy for the selective melting into the plastic. In the laser sintering method, the energy is introduced via a directed laser beam. In the high-speed sintering (HSS) method, the energy is introduced via infrared (IR) sources in combination with an IR absorber selectively printed into the powder bed. Selective heat sintering (SHS) utilizes the printing unit of a conventional thermal printer in order to selectively melt thermoplastic powders. Preference is given to selective laser sintering methods (SLS).

The term "melt layering method" refers to a manufacturing method from the field of additive manufacturing, with which a workpiece is built up layer by layer, for example from a fusible plastic. The plastic can be used with or without further additions such as fibres. Machines for FFF are part of the machine class of the 3D printers. This method is based on the liquefaction of a plastic or wax material in wire form by heating. In the course of final cooling, the material solidifies. The material is applied by extrusion with a heating nozzle which is freely movable in relation to a plane of manufacture. It is possible here either for the manufacturing plane to be fixed and the nozzle to be freely movable or for a nozzle to be fixed and a substrate table (with a manufacturing plane) to be moved, or for both elements, the nozzle and manufacturing plane, to be movable. The speed with which the substrate and nozzle are movable with respect to one another is preferably within a range from 1 to 200 mm/s. According to the application, the layer thickness is within a range of 0.025 to 1.25 mm; the exit diameter of the material jet (nozzle outlet diameter) of the nozzle is typically at least 0.05 mm.

In the layer-by-layer model production, the individual layers are thus combined to form a complex part. A body is typically constructed by tracing each working plane line by line (formation of a layer) and then moving the working plane upward in the manner of a stack (forming at least one further layer atop the first layer), giving rise to a shape in a layer-by-layer manner. The exit temperature of the material mixtures from the nozzle may, for example, be 80°C to 420°C. It is additionally possible to heat the substrate table, for example to 20°C to 250°C. It is thus possible to prevent excessively fast cooling of the layer applied, such that a further layer applied thereon bonds sufficiently to the first layer.

The struts of the body have an average length of $\geq 200\ \mu m$ to $\leq 50$ mm, preferably $\geq 500\ \mu m$ to $\leq 10$ mm and more preferably $\geq 750\ \mu m$ to $\leq 5$ mm. The struts also have an average thickness of $\geq 100\ \mu m$ to $\leq 5$ mm, preferably $\geq 500\ \mu m$ to $\leq 2.5$ mm and more preferably $\geq 750\ \mu m$ to $\leq 1$ mm. If the thickness changes over the course of an individual strut, which may quite possibly be intentional for construction purposes, the average thickness is first determined for the individual strut and then this value is used for the calculation of the average thickness of the totality of the struts.

A specific example would be a porous body having an average length of the struts of $\geq 4$ mm to $\leq 5$ mm and an average thickness of the struts of $\geq 800\ \mu m$ to $\leq 900\ \mu m$.

The porous body, also referred to merely as body hereinafter, can be compressed, in accordance with its end use as a supporting element and/or bearing element. In at least one spatial direction, the body may therefore have a compression hardness (40% compression, DIN EN ISO 3386-1:2010-09) of $\geq 10$ to $\leq 100$ kPa, preferably $\geq 20$ to $\leq 70$ kPa and more preferably $\geq 30$ to $\leq 40$ kPa.

The average spatial density of the node points in the porous body may, for example, be $\geq 5$ node points/cm$^3$ to $\leq 200$ node points/cm$^3$, preferably $\geq 10$ node points/cm$^3$ to $\leq 100$ node points/cm$^3$, more preferably $\geq 3$ node points/cm$^3$ to $\leq 60$ node points/cm$^3$.

In a preferred embodiment of the use according to the invention, the elastomer is a thermoplastic elastomer and has a melting range (DSC, differential scanning calorimetry; second heating at heating rate 5 K/min) of $\geq 20°C$ to $\leq 240°C$ (preferably $\geq 40°C$ to $\leq 220°C$, more preferably $\geq 70°C$ to $\leq 200°C$), a Shore A hardness according to DIN ISO 7619-1 of $\geq 40$ to $\leq 98$ (preferably $\geq 50$ to $\leq 95$, more preferably $\geq 60$ to $\leq 90$) and a melt volume rate (MVR) according to ISO 1133 (190°C, 10 kg) of $\geq 25$ to $\leq 90$ (preferably $\geq 30$ to $\leq 80$, more preferably $\geq 35$ to $\leq 65$) cm$^3$/10 min.

In this DSC analysis, the material is subjected to the following temperature cycle: 1 minute at minus 60°C, then heating to 240°C at 5 Kelvin/minute, then cooling to minus 60°C at 5 Kelvin/minute, then 1 minute at minus 60°C, then heating to 240°C at 5 Kelvin/minute.

In a preferred embodiment of the use according to the invention, the elastomer is a thermoplastic elastomer and has a melting range (DSC, differential scanning calorimetry; second heating at heating rate 5 K/min) of $\geq 20°C$ to $\leq 200°C$ (preferably $\geq 40°C$ to $\leq 190°C$, more preferably $\geq 70°C$ to $\leq 180°C$), a Shore A hardness according to DIN ISO 7619-1 of $\geq 40$ to $\leq 98$ (preferably $\geq 50$ to $\leq 95$, more preferably $\geq 60$ to $\leq 90$) and a melt volume rate (MVR) according to ISO 1133 (190°C, 10 kg) of $\geq 25$ to $\leq 90$ (preferably $\geq 30$ to $\leq 80$, more preferably $\geq 35$ to $\leq 65$) cm$^3$/10 min.

In this DSC analysis, the material is subjected to the following temperature cycle: 1 minute at minus 60°C, then heating to 200°C at 5 Kelvin/minute, then cooling to minus 60°C at 5 Kelvin/minute, then 1 minute at minus 60°C, then heating to 200°C at 5 Kelvin/minute.

In a further preferred embodiment of the use according to the invention, the elastomer is a thermoplastic elastomer and has a melting range (DSC, differential scanning calorimetry; second heating at heating rate 5 K/min) of $\geq 20°C$ to $\leq 240°C$ (preferably $\geq 40°C$ to $\leq 220°C$, more preferably $\geq 70°C$ to $\leq 200°C$), a Shore A hardness according to DIN ISO 7619-1 of $\geq 40$ to $\leq 98$ (preferably $\geq 50$ to $\leq 95$, more preferably $\geq 60$ to $\leq 90$), a melt volume rate (MVR) at a temperature T according to ISO 1133 (10 kg) of 5 to 15 (preferably $\geq 6$ to $\leq 12$, more preferably $\geq 7$ to $\leq 10$) cm$^3$/10 min, and a change in the melt volume rate (10 kg) in the event of an increase in this temperature T by 20°C of $\leq 90$ (preferably $\leq 70$, more preferably $\leq 50$) cm$^3$/10 min.

In this DSC analysis too, the material is subjected to the following temperature cycle: 1 minute at minus 60°C, then heating to 240°C at 5 Kelvin/minute, then cooling to minus 60°C at 5 Kelvin/minute, then 1 minute at minus 60°C, then heating to 240°C at 5 Kelvin/minute.

In a further preferred embodiment of the use according to the invention, the elastomer is a thermoplastic elastomer and has a melting range (DSC, differential scanning calorimetry; second heating at heating rate 5 K/min) of $\geq 20°C$ to $\leq 200°C$ (preferably $\geq 40°C$ to $\leq 190°C$, more preferably $\geq 70°C$ to $\leq 180°C$), a Shore A hardness according to DIN ISO 7619-1 of $\geq 40$ to $\leq 98$ (preferably $\geq 50$ to $\leq 95$, more preferably $\geq 60$ to $\leq 90$), a melt volume rate (MVR) at a temperature T according to ISO 1133 (10 kg) of 5 to 15 (preferably $\geq 6$ to $\leq 12$, more preferably $\geq 7$ to $\leq 10$) cm$^3$/10

min, and a change in the melt volume rate (10 kg) in the event of an increase in this temperature T by 20°C of ≤ 90 (preferably ≤ 70, more preferably ≤ 50) cm$^3$/10 min.

In this DSC analysis too, the material is subjected to the following temperature cycle: 1 minute at minus 60°C, then heating to 200°C at 5 Kelvin/minute, then cooling to minus 60°C at 5 Kelvin/minute, then 1 minute at minus 60°C, then heating to 200°C at 5 Kelvin/minute.

This thermoplastic elastomer, preferably a thermoplastic polyurethane elastomer, has flat melting characteristics. The melting characteristics are determined by the change in the MVR (melt volume rate) according to ISO 1133 with a preheating time of 5 minutes and 10 kg as a function of temperature. Melting characteristics are considered to be "flat" when the MVR has a starting value of 5 to 15 cm$^3$/10 min at a starting temperature $T_x$ and rises by not more than 90 cm$^3$/10 min as a result of a temperature increase by 20°C to $T_{x+20}$.

In a further preferred embodiment of the use according to the invention, the elastomer is a thermoplastic polyurethane elastomer obtainable from the reaction of the following components:

a) at least one organic diisocyanate

b) at least one compound having groups reactive toward isocyanate groups and having a number-average molecular weight ($M_n$) of ≥ 500 g/mol to ≤ 6000 g/mol and a number-average functionality of the totality of the components under b) of ≥ 1.8 to ≤ 2.5

c) at least one chain extender having a molecular weight (Mn) of 60 - 450 g/mol and a number-average functionality of the totality of the chain extenders under c) of 1.8 to 2.5.

For synthesis of this thermoplastic polyurethane elastomer (TPU), examples of specific isocyanate components under a) include: aliphatic isocyanates such as ethylene diisocyanate, tetramethylene 1,4-diisocyanate, hexamethylene 1,6-diisocyanate, dodecane 1,12-diisocyanate, cycloaliphatic diisocyanates such as isophorone diisocyanate, cyclohexane 1,4-diisocyanate, 1-methylcyclohexane 2,4-diisocyanate and 1-methylcyclohexane 2,6-diisocyanate and the corresponding isomer mixtures, dicyclohexylmethane 4,4'-diisocyanate, dicyclohexylmethane 2,4'-diisocyanate and dicyclohexylmethane 2,2'-diisocyanate and the corresponding isomer mixtures, and also aromatic diisocyanates such as tolylene 2,4-diisocyanate, mixtures of tolylene 2,4-diisocyanate and tolylene 2,6-diisocyanate, diphenylmethane 4,4'-diisocyanate, diphenylmethane 2,4'-diisocyanate and diphenylmethane 2,2'-diisocyanate, mixtures of diphenylmethane 2,4'-diisocyanate and diphenylmethane 4,4'-diisocyanate, urethane-modified liquid diphenylmethane 4,4'-diisocyanates or diphenylmethane 2,4'-diisocyanates, 4,4'-diisocyanatodiphenylethane-(1,2) and naphthylene 1,5-diisocyanate. Preference is given to using hexamethylene 1,6-diisocyanate, cyclohexane 1,4-diisocyanate, isophorone diisocyanate, dicyclohexylmethane diisocyanate, diphenylmethane diisocyanate isomer mixtures having a diphenylmethane 4,4'-diisocyanate content of more than 96% by weight and especially diphenylmethane 4,4'-diisocyanate and naphthylene 1,5-diisocyanate. The diisocyanates mentioned can be employed individually or in the form of mixtures with one another. They can also be used together with up to 15 mol% (calculated on the basis of total diisocyanate) of a polyisocyanate, but the amount of polyisocyanate added may at most be sufficient to give rise to a product that is still thermoplastically processible. Examples of polyisocyanates are triphenylmethane 4,4',4"-triisocyanate and polyphenyl polymethylene polyisocyanates.

Examples of relatively long-chain isocyanate-reactive compounds under b) include those having an average of at least 1.8 to 3.0 Zerewitinoff-active hydrogen atoms and a number-average molecular weight of 500 to 10 000 g/mol. As well as compounds having amino groups, thiol groups or carboxyl groups, these especially include compounds having two to three, preferably two, hydroxyl groups, specifically those having number-average molecular weights Mn of 500 to 6000 g/mol, especially preferably those having a number-average molecular weight Mn of 600 to 4000 g/mol, for example hydroxyl group-comprising polyester polyols, polyether polyols, polycarbonate polyols and polyester polyamides. Suitable polyester diols can be prepared by reacting one or more alkylene oxides having 2 to 4 carbon atoms in the alkylene radical with a starter molecule containing two active hydrogen atoms in bound form. Examples of alkylene oxides include: ethylene oxide, 1,2-propylene oxide, epichlorohydrin and 1,2-butylene oxide and 2,3-butylene oxide. Employed with preference are ethylene oxide, propylene oxide and mixtures of 1,2-propylene oxide and ethylene oxide. The alkylene oxides can be used individually, in alternating succession or as mixtures. Examples of useful starting molecules include water, amino alcohols, such as N-alkyl- diethanolamines, for example N-methyldiethanolamine, and diols such as ethylene glycol, 1,3-propylene glycol, butane-1,4-diol and hexane-1,6-diol. It is optionally also possible to use mixtures of starter molecules. Suitable polyether diols are additionally the hydroxyl-containing polymerization products of tetrahydrofuran. It is also possible to use trifunctional polyethers in proportions of 0% to 30% by weight, based on the bifunctional polyether diols, but at most in such an amount as to give rise to a product that is still thermoplastically processible. The essentially linear polyether diols preferably have number-average molecular weights n of 500 to 6000 g/mol. They can be employed either individually or in the form of mixtures with one another.

Suitable polyester diols may be prepared, for example, from dicarboxylic acids having 2 to 12 carbon atoms, preferably 4 to 6 carbon atoms, and polyhydric alcohols. Examples of useful dicarboxylic acids include: aliphatic dicarboxylic acids such as succinic acid, glutaric acid, adipic acid, suberic acid, azelaic acid and sebacic acid, or aromatic dicarboxylic acids, such as phthalic acid, isophthalic acid and terephthalic acid. The dicarboxylic acids can be used individually or as mixtures, for example in the form of a succinic acid, glutaric acid and adipic acid mixture. For preparation of the polyester diols, it may possibly be advantageous, rather than the dicarboxylic acids, to use the corresponding dicarboxylic acid derivatives, such as carboxylic diesters having 1 to 4 carbon atoms in the alcohol radical, carboxylic anhydrides or carbonyl chlorides. Examples of polyhydric alcohols are glycols having 2 to 10 and preferably 2 to 6 carbon atoms, e.g. ethylene glycol, diethylene glycol, butane-1,4-diol, pentane-1,5-diol, hexane-1,6-diol, decane-1,10-diol, 2,2-dimethylpropane-1,3-diol, propane-1,3-diol or dipropylene glycol. According to the desired properties, the polyhydric alcohols can be used alone or in a mixture with one another. Also suitable are esters of carbonic acid with the diols mentioned, especially those having 4 to 6 carbon atoms, such as butane-1,4-diol or hexane-1,6-diol, condensation products of $\omega$-hydroxycarboxylic acids such as $\omega$-hydroxycaproic acid or polymerization products of lactones, for example optionally substituted $\omega$-caprolactone. Polyester diols used are preferably ethanediol polyadipates, butane-1,4-diol polyadipates, ethanediol butane-1,4-diol polyadipates, hexane-1,6-diol neopentyl glycol polyadipates, hexane-1,6-diol butane-1,4-diol polyadipates and polycaprolactones. The polyester diols preferably have number-average molecular weights Mn of 450 to 6000 g/mol and can be employed individually or in the form of mixtures with one another.

The chain extenders c) have an average of 1.8 to 3.0 Zerewitinoff-active hydrogen atoms and have a molecular weight of 60 to 450 g/mol. This is understood to mean, as well as compounds having amino groups, thiol groups or carboxyl groups, those having two to three, preferably two, hydroxyl groups.

Chain extenders used are preferably aliphatic diols having 2 to 14 carbon atoms, for example ethanediol, propane-1,2-diol, propane-1,3-diol, butane-1,4-diol, butane-2,3-diol, pentane-1,5-diol, hexane-1,6-diol, diethylene glycol and dipropylene glycol. Also suitable, however, are diesters of terephthalic acid with glycols having 2 to 4 carbon atoms, e.g. bis(ethylene glycol) terephthalate or bis(butane-1,4-diol) terephthalate, hydroxyalkylene ethers of hydroquinone, e.g. 1,4-di((β-hydroxyethyl)hydroquinone, ethoxylated bisphenols, e.g. 1,4-di((β-hydroxyethyl)bisphenol A, (cyclo)aliphatic diamines, such as isophoronediamine, ethylenediamine, propylene-1,2-diamine, propylene-1,3-diamine, N-methylpropylene-1,3-diamine, N,N'-dimethylethylenediamine and aromatic diamines such as tolylene-2,4-diamine, tolylene-2,6-diamine, 3,5-diethyltolylene-2,4-diamine or 3,5-diethyltolylene-2,6-diamine or primary mono-, di-, tri- or tetraalkyl-substituted 4,4'-diaminodiphenylmethanes. Chain extenders used are more preferably ethanediol, butane-1,4-diol, hexane-1,6-diol, 1,4-di(β-hydroxyethyl)hydroquinone or 1,4-di(β-hydroxyethyl)bisphenol A. It is also possible to use mixtures of the abovementioned chain extenders.

In addition, it is also possible to use relatively small amounts of triols.

Compounds that are monofunctional with respect to isocyanates can be used under f) in proportions of up to 2% by weight, based on TPU, as what are called chain terminators. Suitable examples include monoamines such as butyl- and dibutylamine, octylamine, stearylamine, N-methylstearylamine, pyrrolidine, piperidine or cyclohexylamine, monoalcohols such as butanol, 2-ethylhexanol, octanol, dodecanol, stearyl alcohol, the various amyl alcohols, cyclohexanol and ethylene glycol monomethyl ether.

The isocyanate-reactive substances should preferably be chosen such that the number-average functionality thereof does not significantly exceed two when thermoplastically processible polyurethane elastomers are to be prepared. If higher-functionality compounds are used, the overall functionality should be lowered correspondingly by compounds having a functionality of < 2.

The relative amounts of the isocyanate groups and isocyanate-reactive groups are preferably chosen such that the ratio is 0.9:1 to 1.2:1, preferably 0.95:1 to 1.1:1.

The thermoplastic polyurethane elastomers used in accordance with the invention may contain, as auxiliaries and/or additions, up to a maximum of 20% by weight, based on the total amount of TPU, of the customary auxiliaries and additions. Typical auxiliaries and additions are catalysts, anti-blocking agents, inhibitors, pigments, dyes, flame retardants, stabilizers against ageing and weathering influences, and against hydrolysis, light, heat and discolouration, plasticizers, lubricants and demoulding agents, fungistatic and bacteriostatic substances, reinforcing agents and inorganic and/or organic fillers, and mixtures thereof.

Examples of the additions are lubricants, such as fatty acid esters, metal soaps thereof, fatty acid amides, fatty acid ester amides and silicone compounds, and reinforcing agents, for example fibrous reinforcing materials such as inorganic fibres, which can be produced according to the prior art and may also have been sized. Further details of the auxiliaries and additions mentioned can be found in the specialist literature, for example the monograph by J. H. Saunders and K. C. Frisch "High Polymers", volume XVI, Polyurethanes, parts 1 and 2, Interscience Publishers 1962 and 1964, the Taschenbuch für Kunststoff-Additive [Handbook of Plastics Additives] by R. Gächter and H. Müller (Hanser Verlag Munich 1990) or DE-A 29 01 774.

Suitable catalysts are the customary tertiary amines known according to the prior art, for example triethylamine, dimethylcyclohexylamine, N-methylmorpholine, N,N'-dimethylpiperazine, 2-(dimethylaminoethoxy)ethanol, diazabicyclo[2.2.2]octane and the like, and especially organic metal compounds such as titanic esters, iron compounds or tin compounds such as tin diacetate, tin dioctoate, tin dilaurate or the dialkyltin salts of aliphatic carboxylic acids such as dibutyltin diacetate or dibutyltin dilaurate or the like. Preferred catalysts are organic metal compounds, especially titanic esters, iron compounds and tin compounds. The total amount of catalysts in the TPU used is generally about 0% to 5% by weight, preferably 0% to 2% by weight, based on the total amount of TPU.

Polyurethane elastomers suitable in accordance with the invention may, for example, be 2-component cast elastomers. They can be obtained by known methods from a reaction mixture comprising:

a) at least one organic polyisocyanate

b) at least one compound having groups reactive toward isocyanate groups and having a number-average molecular weight $(M_n)$ of $\geq 500$ g/mol to $\leq 6000$ g/mol and at least a number-average functionality of the totality of the components of $\geq 2.1$

c) optionally at least one chain extender having a molecular weight (Mn) of 60 - 450 g/mol.

For details relating to polyisocyanates and NCO-reactive compounds, reference is made to the details above.

In a further preferred embodiment of the use according to the invention, the elastomer is a thermoplastic elastomer and has a melting range (DSC, differential scanning calorimetry; 2nd heating at heating rate 5 K/min) of $\geq 20°C$ to $\leq 100°C$ and has a magnitude of complex viscosity $|\eta^*|$ (determined by viscometry measurement in the melt with a plate/plate oscillation shear viscometer at 100°C and a shear rate of 1/s) of $\geq 10$ Pas to $\leq 1\,000\,000$ Pas.

This thermoplastic elastomer has a melting range of $\geq 20°C$ to $\leq 100°C$, preferably of $\geq 25°C$ to $\leq 90°C$ and more preferably of $\geq 30°C$ to $\leq 80°C$. In the DSC analysis for determination of the melting range, the material is subjected to the following temperature cycle: 1 minute at -60°C, then heating to 200°C at 5 Kelvin/minute, then cooling to -60°C at 5 Kelvin/minute, then 1 minute at -60°C, then heating to 200°C at 5 Kelvin/minute.

It is possible that the temperature interval between the start of the melting operation and the end of the melting operation as determinable by the above DSC protocol is $\leq 20°C$, preferably $\leq 10°C$ and more preferably $\leq 5°C$.

This thermoplastic elastomer also has a magnitude of complex viscosity $|\eta^*|$ (determined by viscometry measurement in the melt with a plate/plate oscillation viscometer according to ISO 6721-10 at 100°C and a shear rate of 1/s) of $\geq 10$ Pas to $\leq 1\,000\,000$ Pas. Preferably, $|\eta^*| \geq 100$ Pas to $\leq 500\,000$ Pas, more preferably $\geq 1000$ Pas to $\leq 200\,000$ Pas.

The magnitude of complex viscosity $|\eta^*|$ describes the ratio of the viscoelastic moduli G' (storage modulus) and G" (loss modulus) to the excitation frequency $\omega$ in a dynamic/mechanical material analysis:

$$|\eta^*| = \sqrt{\left[\left(\frac{G'}{\omega}\right)^2 + \left(\frac{G''}{\omega}\right)^2\right]} = \frac{|G^*|}{\omega}$$

This thermoplastic elastomer is preferably a thermoplastic polyurethane elastomer.

In a further preferred embodiment of the use according to the invention, the elastomer is a thermoplastic polyurethane elastomer obtainable from the reaction of a polyisocyanate component and a polyol component, where the polyol component comprises a polyester polyol having a no-flow point (ASTM D5985) of $\geq 25°C$.

It is optionally also possible, in the reaction to give this polyurethane, to use diols of molecular weight range from $\geq 62$ to $\leq 600$ g/mol as chain extenders.

This polyisocyanate component may comprise a symmetric polyisocyanate and/or a nonsymmetric polyisocyanate. Examples of symmetric polyisocyanates are 4,4'-MDI and HDI.

In the case of nonsymmetric polyisocyanates, the steric environment of one NCO group in the molecule is different from the steric environment of a further NCO group. In that case, one isocyanate group reacts more quickly with groups reactive toward isocyanates, for example OH groups, while the remaining isocyanate group is less reactive. A consequence of the nonsymmetric structure of the polyisocyanate is that the polyurethanes formed with these polyisocyanates also have a structure which is less straight.

Examples of suitable nonsymmetric polyisocyanates are selected from the group comprising: 2,2,4-trimethylhexamethylene diisocyanate, ethylethylene diisocyanate, nonsymmetric isomers of dicyclohexylmethane diisocyanate $(H_{12}\text{-MDI})$, nonsymmetric isomers of 1,4-diisocyanatocyclohexane, nonsymmetric isomers of 1,3-diisocyanatocyclohexane, nonsymmetric isomers of 1,2-diisocyanatocyclohexane, nonsymmetric isomers of 1,3-diisocyanatocyclopentane, nonsymmetric isomers of 1,2-diisocyanatocyclopentane, nonsymmetric isomers of 1,2-diisocyanatocyclobutane, 1-isocyanatomethyl-3-isocyanato-1,5,5-trimethylcyclohexane (isophorone diisocyanate, IPDI), 1-methyl-2,4-diisocyanatocyclohexane, 1,6-diisocyanato-2,2,4-trimethylhexane, 1,6-diisocyanato-2,4,4-trimethylhexane, 5-isocyanato-1-(3-isocyanatoprop-1-yl)-1,3,3-trimethylcyclohexane, 5-isocyanato-1-(4-isocyanatobut-1-yl)-1,3,3-trimethylcyclohexane, 1-isocyanato-2-(3-isocyanatoprop-1-yl)cyclohexane, 1-isocyanato-2-(2-isocyanatoeth-1-yl)-cyclohexane, 2-heptyl-3,4-bis(9-isocyanatononyl)-1-pentylcyclohexane, norbornane diisocyanatomethyl, diphenylmethane 2,4'-diisocyanate (MDI), tolylene 2,4- and 2,6-diisocyanate (TDI), derivatives of the diisocyanates listed, especially dimerized or trimerized types, or a combination of at least two of these.

Preference is given to 4,4'-MDI or a mixture comprising IPDI and HDI as polyisocyanate component.

This polyol component includes a polyester polyol having a no-flow point (ASTM D5985) of $\geq$ 25°C, preferably $\geq$ 35°C, more preferably $\geq$ 35°C to $\leq$ 55°C. To determine the no-flow point, a graduated vessel containing the sample is set in slow rotation (0.1 rpm). A flexibly mounted measurement head dips into the sample and, on attainment of the no-flow point, is moved away from its position as a result of the abrupt increase in viscosity; the resulting tilting motion triggers a sensor.

Examples of polyester polyols which can have such a no-flow point are reaction products of phthalic acid, phthalic anhydride or symmetric $\alpha,\omega$-$C_4$- to $C_{10}$-dicarboxylic acids with one or more $C_2$- to $C_{10}$-diols. They preferably have a number-average molecular weight $M_n$ of $\geq$ 400 g/mol to $\leq$ 6000 g/mol. Suitable diols are especially monoethylene glycol, butane-1,4-diol, hexane-1,6-diol and neopentyl glycol.

Preferred polyester polyols are specified hereinafter, with specification of their acid and diol components: adipic acid + monoethylene glycol; adipic acid + monoethylene glycol + butane-1,4-diol; adipic acid + butane-1,4-diol; adipic acid + hexane-1,6-diol + neopentyl glycol; adipic acid + hexane-1,6-diol; adipic acid + butane-1,4-diol + hexane-1,6-diol; phthalic acid/anhydride + monoethylene glycol + trimethylolpropane; phthalic acid/anhydride + monoethylene glycol. Preferred polyurethanes are obtained from a mixture comprising IPDI and HDI as polyisocyanate component and a polyol component comprising an aforementioned preferred polyester polyol. Particular preference is given to the combination of a mixture comprising IPDI and HDI as polyisocyanate component with a polyester polyol of adipic acid + butane-1,4-diol + hexane-1,6-diol for formation of the polyurethanes.

It is further preferable that these polyester polyols have an OH number (DIN 53240) of $\geq$ 25 to $\leq$ 170 mg KOH/g and/or a viscosity (75°C, DIN 51550) of $\geq$ 50 to $\leq$ 5000 mPas.

One example is a polyurethane obtainable from the reaction of a polyisocyanate component and a polyol component, where the polyisocyanate component comprises an HDI and IPDI and where the polyol component comprises a polyester polyol obtainable from the reaction of a reaction mixture comprising adipic acid and also hexane-1,6-diol and butane-1,4-diol with a molar ratio of these diols of $\geq$ 1:4 to $\leq$ 4:1 and which has a number-average molecular weight $M_n$ (GPC, against polystyrene standards) of $\geq$ 4000 g/mol to $\leq$ 6000 g/mol. Such a polyurethane may have a magnitude of complex viscosity $|\eta^*|$ (determined by viscometry measurement in the melt with a plate/plate oscillation viscometer according to ISO 6721-10 at 100°C and a shear rate of 1/s) of $\geq$ 4000 Pas to $\leq$ 160 000 Pas.

A further example of a suitable polyurethane is:

1. Substantially linear polyester polyurethanes having terminal hydroxyl groups as described in EP 0192946 A1, prepared by reaction of

    a) polyester diols of molecular weight above 600 and optionally

    b) diols from the molecular weight range of 62 to 600 g/mol as chain extender with

    c) aliphatic isocyanates,

maintaining an equivalents ratio of hydroxyl groups of components a) and b) to isocyanate groups of component c) of 1:0.9 to 1:0.999, where component a) consists to an extent of at least 80% by weight of polyester diols from the molecular weight range of 4000 to 6000 based on (i) adipic acid and (ii) mixtures of 1,4-dihydroxybutane and 1,6-dihydroxyhexane in a molar ratio of the diols of 4:1 to 1:4.

In the polyester polyurethanes specified under 1., it is preferable that component a) consists to an extent of 100% of a polyester diol from the molecular weight range of 4000 to 6000, the preparation of which used, as diol mixture, a mixture of 1,4-dihydroxybutane and 1,6-dihydroxyhexane in a molar ratio of 7:3 to 1:2.

In the polyester polyurethanes specified under 1., it is further preferable that component c) comprises IPDI and additionally HDI.

In the polyester polyurethanes specified under 1., it is further preferable that the preparation thereof also involved using, as component b), alkanediols selected from the group consisting of: 1,2-dihydroxyethane, 1,3-dihydroxypropane, 1,4-dihydroxybutane, 1,5-dihydroxypentane, 1,6-dihydroxyhexane or a combination of at least two of these, in an amount of up to 200 hydroxyl equivalent per cent, based on component a).

It is also possible that the thermoplastic elastomer, after heating to 100°C and cooling to 20°C at a cooling rate of 4°C/min, within a temperature interval of 25°C to 40°C, for $\geq$ 1 minute (preferably $\geq$ 1 minute to $\leq$ 30 minutes, more

preferably ≥ 10 minutes to ≤ 15 minutes), has a storage modulus G' (determined at the prevailing temperature in each case with a plate/plate oscillation viscometer according to ISO 6721-10 at a shear rate of 1/s) of ≥ 100 kPa to ≤ 1 MPa and, after cooling to 20°C and storage for 20 minutes, has a storage modulus G' (determined at 20°C with a plate/plate oscillation viscometer according to ISO 6721-10 at a shear rate of 1/s) of ≥ 10 MPa.

In a further preferred embodiment of the use according to the invention, in the porous body, the void volume makes up ≥ 50% to ≤ 99%, preferably ≥ 55% to ≤ 95 %, more preferably ≥ 60% to ≤ 90%, of the volume of the body. With knowledge of the density of the starting material for the body and a density of the body itself, this parameter can be determined easily. Preferably, the void volume makes up ≥ 65 % to ≤ 85 % of the volume of the body.

In a further preferred embodiment of the use according to the invention, the node points are distributed in the porous body in a periodically repeating manner in at least part of the volume of the body. If the node points are distributed in a periodically repeating manner in a volume, this circumstance can be described by the means of crystallography. The node points may be arranged in accordance with the 14 Bravais lattices: simple cubic (sc), body-centred cubic (bcc), face-centred cubic (fcc), simple tetragonal, body-centred tetragonal, simple orthorhombic, base-centred orthorhombic, body-centred orthorhombic, face-centred orthorhombic, simple hexagonal, rhombohedral, simple monoclinic, base-centred monoclinic and triclinic. Preference is given to the cubic lattices sc, fcc and bcc.

The construction of the porous body may, at least in cases of regular arrangement of the node points in the space, also be described as the result of penetration of hollow channels through a formerly solid body. Thus, in a further preferred embodiment of the use according to the invention, the void volume in the porous body is formed in the form of mutually penetrating first, second and third groups of channels, wherein a multitude of individual channels within each respective group of channels run parallel to one another and the first group of channels, the second group of channels and the third group of channels extend in different spatial directions.

For the use of the porous body as a cushion, mattress and the like, it may be advantageous when it has regions of different mechanical properties and especially regions having different compression hardness and possibly different tan $\delta$ values. Thus, a mattress in the region of the shoulder areas may be configured in order to allow a person lying on his/her side to sink lower than the rest of the person's body, in order that the person still lies straight overall with respect to the spinal column. If the body takes the form of a one-piece mattress, the variation in the mechanical properties can especially be achieved through one or both of the embodiments described hereinafter. In this respect, it is possible to achieve a modular construction to give a one-piece mattress, a one-piece cushion, etc.

In a further embodiment of the use according to the invention, the average minimum angle between adjacent struts in the porous body is ≥ 30° to ≤ 140°, preferably ≥ 45° to ≤ 120°, more preferably ≥ 0° to ≤ 100°. This angle is always ascertained in the unstressed state of the body. Adjacent struts are those struts that have a common node point. The minimum angle between two adjacent struts should be understood such that, considering a strut having multiple adjacent struts that form different angles with the strut in question, the smallest of these angles is selected. One example of this is a node point having, expressed in chemical language, octahedral coordination. Six struts emanate from this node point, with opposite struts forming an angle of 180° to one another and struts that are directly adjacent in a plane forming an angle of 90° to one another. In this example, the minimum angle between adjacent struts would be 90°.

In a further preferred embodiment of the use according to the invention, the spatial density of the node points in a first region of the body is thus different from the spatial density of the node points in a second region of the body. From a geometric point of view, the centre of the node points is being considered here. The spatial density of the node points in the first region of the body may, for example, be ≥ 5 node points/cm$^3$ to ≤ 200 node points/cm$^3$, preferably ≥ 10 node points/cm$^3$ to ≤ 100 node points/cm$^3$, more preferably ≥ 3 node points/cm$^3$ to ≤ 60 node points/cm$^3$. The spatial density of the node points in the second region of the body may, with the proviso that it is different from the density in the first region, for example, be ≥ 5 node points/cm$^3$ to ≤ 200 node points/cm$^3$, preferably ≥ 10 node points/cm$^3$ to ≤ 100 node points/cm$^3$, more preferably ≥ 3 node points/cm$^3$ to ≤ 60 node points/cm$^3$.

It is also possible to express the differences in spatial density in that the spatial density of the node points in a first region of the body is ≥1.1 times to ≤ 10 times, preferably ≥ 1.5 times to ≤ 7 times, more preferably ≥2 times to ≤ 5 times, the spatial density of the node points in a second region of the body.

A specific example would be a porous body having a density of the node points in a first region of ≥ 39 node points/cm$^3$ to ≤ 41 node points/cm$^3$ and a density of the node points in a second region of ≥ 19 node points/cm$^3$ to ≤ 21 node points/cm$^3$.

In a preferred embodiment of the use according to the invention, in the porous body, the material of the body in a first region of the body is different from the material in a second region of the body. Different materials having correspondingly different mechanical properties can preferably be used in a melt layering process with printheads for more than one material for production of the body.

Useful materials are either two different materials from one substance class, for example two thermoplastic polyurethane elastomers having different moduli of elasticity, or two materials from different substance classes. An example of this is two members from the group of: thermoplastic elastomers (TPE), thermoplastic polyurethane (TPU), polycarbonate (PC), polyamide (PA), polyethylene terephthalate (PET), polybutylene terephthalate (PBT), cycloolefinic copolyesters (COC), polyether ether ketone (PEEK), polyether amide ketone (PEAK), polyetherimide (PEI), polyimide (PI), polypropylene (PP) or polyethylene (PE), acrylonitrile-butadiene-styrene (ABS), polylactate (PLA), polymethylmethacrylate (PMMA), polystyrene (PS), polyvinyl chloride (PVC), polyoxymethylene (POM), polyacrylonitrile (PAN), polyacrylate or celluloid.

The present invention is elucidated in detail by the figures which follow with reference to preferred embodiments, but without being restricted thereto. The figures show:

FIG. 1 a porous body in a first view

FIG. 2 the porous body from FIG. 1 in another view

FIG. 3 the porous body from FIG. 1 in another view

FIG. 4 a further porous body

FIG. 5 a porous structure according to examples 1 and 2

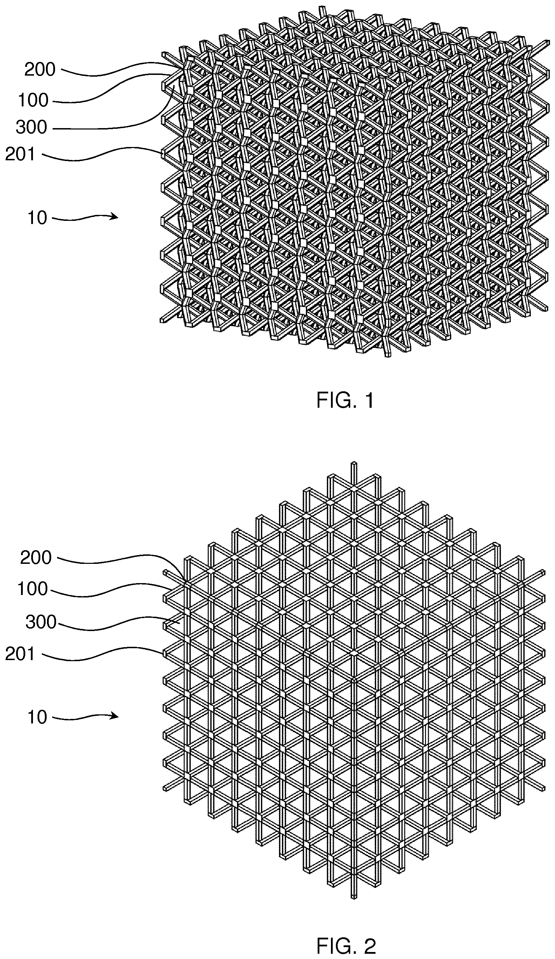

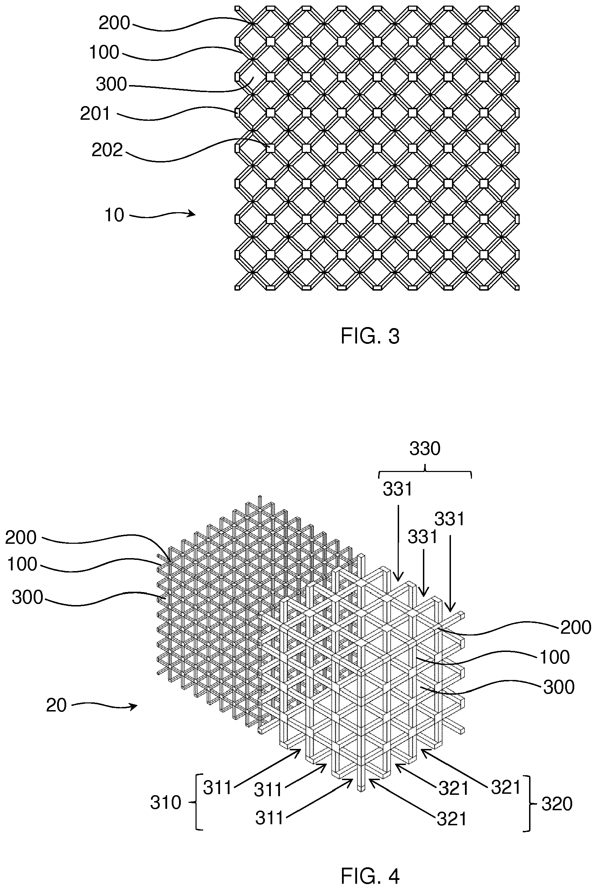

FIG. 1 shows a porous body 10 in perspective view with a three-dimensional network of node points 200 joined to one another by struts 100. Between the struts 100 is the void space 300. At the edges of the body 10, there are truncated node points 201, the struts from which project only into the interior of the body 10. FIG. 2 shows the same body 10 in a first isometric view and FIG. 3 the same body 10 in a further isometric view, corresponding to a top view of one side of the body 10. On the outer faces of the body 10 shown in FIG. 3, there are also truncated node points identified by the reference numeral 202.

The node points 200 in the body 10 according to the invention may be in regular distribution in at least part of its volume. It is likewise possible for them to be in irregular distribution in at least part of its volume. It is also possible that the body 10 has one or more sub-volumes in which the node points 200 are in regular distribution and one or more sub-volumes in which the node points 200 are in irregular distribution.

According to the structure of the network composed of struts 100 and node points 200 in the porous body 10 according to the invention, particular mechanical properties may also be a function of the spatial direction in which they are determined on the body. This is the case, for example, for the body 10 shown in FIG. 1 to 3. Along the spatial directions corresponding to the base factors of the unit cell, the compression hardness and the tan $\delta$ value in particular may be different than, for example, in a spatial direction including all three base spectres as components.

It is possible that the void volume 300 makes up $\geq 50\%$ to $\leq 99\%$, preferably $\geq 55\%$ to $\leq 95\%$, more preferably $\geq 60\%$ to $\leq 90\%$, of the volume of the body 10. With knowledge of the density of the starting material for the body and the density of the body itself, it is easily possible to determine this parameter.

Preferably, the node points 200 in at least part of the volume of the body 10 are in periodically repeating distribution. When the node points 200 in a volume are in periodically repeating distribution, this circumstance can be described by the means of crystallography. The node points may be arranged in accordance with the 14 Bravais lattices: simple cubic (sc), body-centred cubic (bcc), face-centred cubic (fcc), simple tetragonal, body-centred tetragonal, simple orthorhombic, base-centred orthorhombic, body-centred orthorhombic, face-centred orthorhombic, simple hexagonal, rhombohedral, simple monoclinic, base-centred monoclinic and triclinic. Preference is given to the cubic lattices sc, fcc and bcc.

Persisting with the crystallographic view, the number of struts 100 via which one node point 200 is connected to other node points can be regarded as the coordination number of the node point 200. The average number of struts 100 that proceed from the node points 200 may be $\geq 4$ to $\leq 12$, but it is also possible to achieve coordination numbers that are unusual or are impossible in crystallography. For the determination of the coordination numbers, truncated node points on the outer face of the body, as given by reference numeral 201 in FIG. 1, are not taken into account.

The presence of unusual coordination numbers or those that are impossible in crystallography can especially be achieved when the porous body according to the invention is produced by means of additive manufacturing techniques. It is likewise possible that a first group of node points 200 has a first average number of struts 100 and a second group of node points has a second average number of struts 100, where the first average number is different from the second average number.

In the body 10 shown in FIG. 1 to 3, the node points 200 are arranged in a body-centred cubic lattice. The coordination number and hence the average number of struts that proceed therefrom is 8.

It is possible that the average minimum angle between adjacent struts 100 is $\geq 30°$ to $\leq 140°$, preferably $\geq 45°$ to $\leq 120°$, more preferably $\geq 50°$ to $\leq 100°$. In the case of the body 10 shown in FIG. 1 to 3, at all points, the minimum angle between the struts 100 is about 70.5° (arccos(1/3)), as can be inferred from trigonometric considerations relating to the angle between the spatial diagonals of a cube.

The structure of the porous body may, at least in cases of regular arrangement of the node points 200 in the space, also be described as the result of penetration of hollow channels through a formerly solid body 20. Thus, with reference to FIG. 4, the cavity 300 may take the form of mutually penetrating first 310, second 320 and third 330 groups of channels, where a multitude of individual channels 311, 321, 331 within each respective group of channels run parallel to one another and the first group of channels 310, the second group of channels 320 and the third group of channels 330 extend in different spatial directions.

The body 20 shown in FIG. 4 has, in its section shown to the left of the figure, a higher spatial density of node points 200 than in the section shown to the right of the figure. For better illustration, the aforementioned embodiment is discussed with reference to the section shown on the right. An array 310 of individual channels 311, the direction of which is specified by arrows, extends through the body at right angles to the face of the body facing toward it. It is of course not just the three channels identified by reference numerals but all channels that extend through the body at right angles to the face specified.

The same applies to the channels 321 of the group of channels 320 and the channels 331 of the group of channels 330, which run at right angles to one another and at right angles to the channels 311 of the first group of channels 310. The material of the body which remains between the mutually penetrating channels 311, 321, 331 forms the struts 100 and node points 200.

It is possible that the individual channels 311, 321, 331 have a polygonal or round cross section. Examples of polygonal cross sections are trigonal, tetragonal, pentagonal and hexagonal cross sections. FIG. 4 shows square cross sections of all channels 311, 321, 331. It is also possible that the individual channels 311, 321, 331 within the first 310, second 320 and third 330 group of channels each have the same cross section. This is shown in FIG. 4.

It is likewise possible that the cross section of the individual channels 311 of the first group of channels 310, the cross section of the individual channels 321 of the second group of channels 320 and the cross section of the individual channels 331 of the third group of channels 330 are different from one another. For example, the channels 311 may have a square cross section, the channels 321 a round cross section, and the channels 331 a hexagonal cross section. The cross section of the channels determines the shape of the struts 100, and so, in the case of different cross sections, different characteristics of the body 20 can also be achieved depending on the spatial directions.

In one variant, the spatial density of the node points 200 in a first region of the body 20 may be different from the spatial density of the node points 200 in a second region of the body 20. This is shown in schematic form in the one-piece body 20 according to FIG. 4. As already mentioned, the body 20 shown therein has a higher spatial density of node points 20 in its section shown to the left of the figure than in its section shown to the right of the figure. Only every second node point 200 in the left-hand section forms a strut 100 to a node point 200 in the right-hand section.

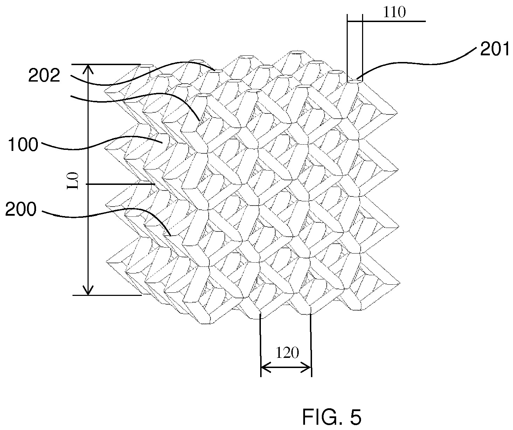

Figures 5 is described in connection with the Examples 1 and 2 as follows in the Experimental part.

**Experimental Part**

Examples

The materials and filaments according to the present invention which were used in the following experiments, have been produced by extrusion of the raw materials (in form of granules, pellets, powder or cut in coarse material with a maximum diameter of 4 to 6 mm) at temperatures below 240 °C into filaments with a diameter of 1.75 mm.

The Thermoplastic Polyurethane (TPU) filaments according to the present invention with a diameter of 1.75 mm have been produced by extrusion of a TPU grade based on an aliphatic isocyanate ether/ester-hybrid type with a hardness of Shore 85A and a TPU grade based on an aromatic isocyanate ester type with a hardness of Shore 90A, respectively.

All filaments have been dried prior to use for 24 h at 30 °C in a vacuum drying cabinet.

Two porous bodies according to the invention were manufactured using an additive manufacturing process and their compression hardness was measured.

Example 1

A porous body was manufactured using the additive manufacturing process of fused deposition modelling (FDM). The build material was a thermoplastic polyurethane (TPU) filament, made by extrusion of pellets of a TPU grade based on an aromatic isocyanate ester type with a hardness of Shore 90A into a round filament with 1.75 mm diameter. This filament was fed into a DD3 extruder mounted on a Prusa I3 printer. The nozzle temperature of the DD3 extruder was set to 235 °C and the print speed to 25 mm/s.

The porous body was printed layer-by-layer using the TPU filament according to a section of the scaffold structure as shown in Fig. 5 as a cube with an edge length L of 30 mm, a bar width 110 of 2.5 mm and a distance 120 between nodes 200 of the body-centred lattice of 4.5 mm. The section of the scaffold structure was chosen in a manner that all bars end at the faces of the cube in truncated nodes 202 and at the edges of the cube in truncated nodes 201.

The compression hardness of the as manufactured porous body was measured on the basis of DIN EN ISO 3386-1:2010-09 using an Instron 5566 machine from Instron® GmbH, Germany. The measurement was performed at room temperature (23 °C) and a traverse speed of 100 mm/min. The porous body was consecutively compressed 3 times by 40 % (corresponding to a residual height L0 of 60 % = 1.8 cm compared to height L of 3 cm of the uncompressed cube) and relaxed immediately using the same traverse speed. Afterwards, the porous structure was compressed for a fourth time by 40 % and the used force for this compression is recorded. The value is given in Table 1.

Example 2

A porous body as of example 1 was manufactured, however, using a filament made out of a TPU grade based on an aliphatic isocyanate ether/ester-hybrid type with a hardness of Shore 85A. The printer settings are equal to the ones given in example 1 and the compression hardness measurement was performed as described in example 1.

Table 1: compression strength investigation based on DIN EN ISO 3386-1:2010-09

| Material | TPU grade of Ex. 1, Shore A 90 | TPU grade of Ex. 2, Shore A 85 |
|---|---|---|
| width [mm] | 29.8 | 28.7 |
| length [mm] | 28.3 | 28.2 |
| hight [mm] | 28.3 | 29.1 |
| area [mm$^2$] | 800.9 | 820.6 |
| volume [mm$^3$] | 23866.5 | 23551.8 |
| weight [g] | 4.1550 | 3.7200 |
| density [g/cm$^3$] | 0.1741 | 0.1579 |
| force for 40% compression [N] | 25.3 | 18.9 |
| modulus [N/mm$^2$] or Mpa | 0.0316 | 0.0230 |
| modulus [kPa] | 31.6 | 23.0 |

It can be clearly observed, that suitable combinations of 3D printed inventive geometry design and materials with a material hardness (Shore A) < 98 according to the invention in combination with the inventive void density and distribution yield excellent mechanical results and perfectly target a 40% compression, DIN EN ISO 3386-1:2010-09 of ≥ 10 to ≤ 100 kPa.

**Claims**

1. Use of an elastic polymer for production of a porous body (10, 20) in an additive manufacturing method, **characterized in that**
   the porous body (10, 20) is a mattress,
   the porous body (10, 20) comprises a three-dimensional network of node points (200) joined to one another by struts (100), and a void volume (300) present between the struts (100), where the struts (100) have an average length of ≥ 200 μm to ≤ 50 mm and the struts (100) have an average thickness of ≥ 100 μm to ≤ 5 mm
   and **in that** the polymer is an elastomer selected from the following group: thermoset polyurethane elastomers (PUR), thermoplastic copolyamides (TPA), thermoplastic copolyesters (TPC), thermoplastic olefin-based elastomers (TPO), styrene block copolymers (TPS), thermoplastic urethane-based elastomers (TPU), crosslinked thermoplastic olefin-based elastomers (TPV), thermoplastic polyvinyl chloride-based elastomers (PVC), thermoplastic silicone-based elastomers and a combination of at least two of these elastomers.

2. Use according to Claim 1, wherein the elastomer is a thermoplastic elastomer and has a melting range (DSC, differential scanning calorimetry; second heating at heating rate 5 K/min) of ≥ 20°C to ≤ 240°C, a Shore A hardness according to DIN ISO 7619-1 of ≥ 40 to ≤ 98 and a melt volume rate (MVR) according to ISO 1133 (190°C, 10 kg) of ≥ 25 to ≤ 90 cm$^3$/10 min.

**3.** Use according to Claim 1, wherein the elastomer is a thermoplastic elastomer and has a melting range (DSC, differential scanning calorimetry; second heating at heating rate 5 K/min) of $\geq 20°C$ to $\leq 200°C$, a Shore A hardness according to DIN ISO 7619-1 of $\geq 40$ to $\leq 98$ and a melt volume rate (MVR) according to ISO 1133 (190°C, 10 kg) of $\geq 25$ to $\leq 90$ cm$^3$/10 min.

**4.** Use according to Claim 1, 2 or 3, wherein the elastomer is a thermoplastic elastomer and has a melting range (DSC, differential scanning calorimetry; second heating at heating rate 5 K/min) of $\geq 20°C$ to $\leq 200°C$,
a Shore A hardness according to DIN ISO 7619-1 of $\geq 40$ to $\leq 98$,
a melt volume rate (MVR) at a temperature T according to ISO 1133 (10 kg) of 5 to 15 cm$^3$/10 min and
a change in the melt volume rate (10 kg) in the event of an increase in this temperature T by 20°C of $\leq 90$ cm$^3$/10 min.

**5.** Use according to any of Claims 1 to 4, wherein the elastomer is a thermoplastic polyurethane elastomer obtainable from the reaction of the following components:

a) at least one organic diisocyanate
b) at least one compound having groups reactive toward isocyanate groups and having a number-average molecular weight ($M_n$) of $\geq 500$ g/mol to $\leq 6000$ g/mol and a number-average functionality of the totality of the components under b) of $\geq 1.8$ to $\leq 2.5$
c) at least one chain extender having a molecular weight (Mn) of 60 - 450 g/mol and a number-average functionality of the totality of the chain extenders under c) of 1.8 to 2.5.

**6.** Use according to Claim 1, wherein the elastomer is a thermoplastic elastomer and has a melting range (DSC, differential scanning calorimetry; 2$^{nd}$ heating at heating rate 5 K/min) of $\geq 20°C$ to $\leq 100°C$ and has a magnitude of complex viscosity $|\eta^*|$ (determined by viscometry measurement in the melt with a plate/plate oscillation shear viscometer at 100°C and a shear rate of 1/s) of $\geq 10$ Pas to $\leq 1\,000\,000$ Pas.

**7.** Use according to any of Claims 1 to 6, wherein the elastomer is a thermoplastic polyurethane elastomer obtainable from the reaction of a polyisocyanate component and a polyol component, wherein the polyol component comprises a polyester polyol having a no-flow point (ASTM D5985) of $\geq 25°C$.

**8.** Use according to any of Claims 1 to 7, wherein the void volume (300) in the porous body (10, 20) makes up $\geq 50\%$ to $\leq 99\%$ of the volume of the body (10, 20).

**9.** Use according to any of Claims 1 to 8, wherein the node points (200) are distributed in the porous body (10, 20) in a periodically repeating manner in at least part of the volume of the body (10, 20).

**10.** Use according to any of Claims 1 to 9, wherein the void volume (300) in the porous body (10, 20) is formed in the form of mutually penetrating first (310), second (320) and third (330) groups of channels, wherein a multitude of individual channels (311, 321, 331) within each respective group of channels run parallel to one another and the first group of channels (310), the second group of channels (320) and the third group of channels (330) extend in different spatial directions.

**11.** Use according to any of Claims 1 to 10, wherein the average minimum angle between adjacent struts (100) in the porous body (10, 20) is $\geq 30°$ to $\leq 140°$.

**12.** Use according to any of Claims 1 to 11, wherein, in the porous body (10, 20), the spatial density of the node points (200) in a first region of the body (10, 20) is different from the spatial density of the node points (200) in a second region of the body (10, 20).

**13.** Use according to any of Claims 1 to 12, wherein, in the porous body (10, 20), the material of the body (10, 20) in a first region of the body (10, 20) is different from the material in a second region of the body (10, 20).

**Patentansprüche**

**1.** Verwendung eines elastischen Polymers zur Herstellung eines porösen Körpers (10, 20) in einem additiven Herstellungsverfahren,
**dadurch gekennzeichnet, dass**

es sich bei dem porösen Körper (10, 20) um eine Matratze handelt,
der poröse Körper (10, 20) ein räumliches Netzwerk von durch Streben (100) miteinander verbundenen Knotenpunkten (200) und einem zwischen den Streben (100) vorliegenden Hohlraum (300) umfasst, wobei die Streben (100) eine durchschnittliche Länge von $\geq 200\ \mu m$ bis $\leq 50\ mm$ aufweisen und die Streben (100) eine durchschnittliche Dicke von $\geq 100\ \mu m$ bis $\leq 5\ mm$ aufweisen
und dass das Polymer ein Elastomer ist, welches ausgewählt ist aus der folgenden Gruppe: duroplastische Polyurethan-Elastomere (PUR), thermoplastische Copolyamide (TPA), thermoplastische Copolyester (TPC), thermoplastische Elastomere auf Olefinbasis (TPO), Styrol-Blockcopolymere (TPS), thermoplastische Elastomere auf Urethanbasis (TPU), vernetzte thermoplastische Elastomere auf Olefinbasis (TPV), thermoplastische Elastomere auf Polyvinylchlorid-Basis (PVC),thermoplastische Elastomere auf Silikon-Basis und einer Kombination aus mindestens zwei dieser Elastomere.

2. Verwendung gemäß Anspruch 1, wobei das Elastomer ein thermoplastisches Elastomer ist und einen Schmelzbereich (DSC, Differential Scanning Calorimetry; zweite Aufheizung mit Aufheizrate 5 K/min) von $\geq 20\ °C$ bis $\leq 240$ °C aufweist, eine Shore A Härte gemäß DIN ISO 7619-1 von $\geq 40$ bis $\leq 98$ aufweist und eine Schmelzvolumenrate (melt volume rate, MVR) gemäß ISO 1133 (190 °C, 10 kg) von $\geq 25$ bis $\leq 90\ cm^3/10\ min$ aufweist.

3. Verwendung gemäß Anspruch 1, wobei das Elastomer ein thermoplastisches Elastomer ist und einen Schmelzbereich (DSC, Differential Scanning Calorimetry; zweite Aufheizung mit Aufheizrate 5 K/min) von $\geq 20\ °C$ bis $\leq 200$ °C aufweist, eine Shore A Härte gemäß DIN ISO 7619-1 von $\geq 40$ bis $\leq 98$ aufweist und eine Schmelzvolumenrate (melt volume rate, MVR) gemäß ISO 1133 (190 °C, 10 kg) von $\geq 25$ bis $\leq 90\ cm^3/10\ min$ aufweist

4. Verwendung gemäß Anspruch 1, 2 oder 3, wobei das Elastomer ein thermoplastisches Elastomer ist und einen Schmelzbereich (DSC, Differential Scanning Calorimetry; zweite Aufheizung mit Aufheizrate 5 K/min) von $\geq 20\ °C$ bis $\leq 200\ °C$ aufweist,
eine Shore A Härte gemäß DIN ISO 7619-1 von $\geq 40$ bis $\leq 98$ aufweist,
bei einer Temperatur T eine Schmelzvolumenrate (melt volume rate, MVR) gemäß ISO 133 (10 kg) von 5 bis 15 $cm^3/10\ min$ aufweist und
eine Änderung der Schmelzvolumenrate (10 kg) bei einer Erhöhung dieser Temperatur T um 20 °C von $\leq 90\ cm^3/10\ min$ aufweist.

5. Verwendung gemäß einem der Ansprüche 1 bis 4, wobei das Elastomer ein thermoplastisches Polyurethanelastomer ist, das erhältlich ist aus der Reaktion der folgenden Komponenten:

a) mindestens einem organischen Diisocyanat
b) mindestens einer gegenüber Isocyanatgruppen reaktive Gruppen aufweisenden Verbindung mit einem zahlenmittleren Molekulargewicht ($M_n$) von $\geq 500\ g/mol$ bis $\leq 6000\ g/mol$ und einer zahlenmittleren Funktionalität der Gesamtheit der Komponenten unter b) von $\geq 1,8$ bis $\leq 2,5$
c) mindestens einem Kettenverlängerungsmittel mit einem Molekulargewicht (Mn) von 60 - 450 g/mol und einer zahlenmittleren Funktionalität der Gesamtheit der Kettenverlängerungsmittel unter c) von 1,8 bis 2,5.

6. Verwendung gemäß Anspruch 1, wobei das Elastomer ein thermoplastisches Elastomer ist und einen Schmelzbereich (DSC, Differential Scanning Calorimetry; zweite Aufheizung mit Aufheizrate 5 K/min.) von $\geq 20\ °C$ bis $\leq 100$ °C aufweist und einen Betrag der komplexen Viskosität $|\eta^*|$ (bestimmt durch Viskosimetriemessung in der Schmelze mit einem Platte/Platte-Oszillationsscherviskosimeter bei 100 °C und einer Scherrate von 1/s) von $\geq 10\ Pas$ bis $\leq$ 1000000 Pas aufweist.

7. Verwendung gemäß einem der Ansprüche 1 bis 6, wobei das Elastomer ein thermoplastisches Polyurethanelastomer ist, das erhältlich ist aus der Reaktion einer Polyisocyanatkomponente und einer Polyolkomponente, wobei die Polyolkomponente ein Polyesterpolyol umfasst, welches einen Stockpunkt (ASTM D5985) von $\geq 25\ °C$ aufweist.

8. Verwendung gemäß einem der Ansprüche 1 bis 7, wobei in dem porösen Körper (10, 20) der Hohlraum (300) $\geq$ 50% bis $\leq$ 99% des Volumens des Körpers (10, 20) ausmacht.

9. Verwendung gemäß einem der Ansprüche 1 bis 8, wobei in dem porösen Körper (10, 20) die Knotenpunkte (200) in zumindest einem Teil des Volumens des Körpers (10, 20) periodisch wiederkehrend verteilt sind.

10. Verwendung gemäß einem der Ansprüche 1 bis 9, wobei in dem porösen Körper (10, 20) der Hohlraum (300) in Form von sich gegenseitig durchdringenden ersten (310), zweiten (320) und dritten (330) Kanalgruppen gebildet wird, wobei eine Mehrzahl von individuellen Kanälen (311, 321, 331) innerhalb jeder jeweiligen Kanalgruppe parallel zueinander verlaufen und die erste Kanalgruppe (310), die zweite Kanalgruppe (320) und die dritte Kanalgruppe (330) sich in unterschiedliche Raumrichtungen erstrecken.

**11.** Verwendung gemäß einem der Ansprüche 1 bis 10, wobei in dem porösen Körper (10, 20) der durchschnittliche minimale Winkel zwischen benachbarten Streben (100) ≥ 30° bis ≤ 140° beträgt.

**12.** Verwendung gemäß einem der Ansprüche 1 bis 11, wobei in dem porösen Körper (10, 20) die räumliche Dichte der Knotenpunkte (200) in einem ersten Bereich des Körpers (10, 20) von der räumlichen Dichte der Knotenpunkte (200) in einem zweiten Bereich des Körpers (10, 20) verschieden ist.

**13.** Verwendung gemäß einem der Ansprüche 1 bis 12, wobei in dem porösen Körper (10, 20) das Material des Körpers (10, 20) in einem ersten Bereich des Körpers (10, 20) von dem Material in einem zweiten Bereich des Körpers (10, 20) verschieden ist.

**Revendications**

**1.** Utilisation d'un polymère élastique pour la production d'un corps poreux (10, 20) dans un procédé de fabrication additive,
**caractérisée en ce que**
le corps poreux (10, 20) est un matelas,
le corps poreux (10, 20) comprend un réseau tridimensionnel de nœuds (200) reliés les uns aux autres par des entretoises (100), et un volume de vide (300) présent entre les entretoises (100), les entretoises (100) ayant une longueur moyenne de ≥ 200 μm à ≤ 50 mm et les entretoises (100) ayant une épaisseur moyenne de ≤ 100 μm à ≤ 5 mm
et **en ce que** le polymère est un élastomère choisi dans le groupe suivant : élastomères de polyuréthane thermodurcis (PUR), copolyamides thermoplastiques (TPA), copolyesters thermoplastiques (TPC), élastomères à base d'oléfine thermoplastiques (TPO), copolymères séquencés de styrène (TPS), élastomères à base d'uréthane thermoplastiques (TPU), élastomères à base d'oléfine thermoplastiques réticulés (TPV), élastomères à base de polychlorure de vinyle thermoplastiques (PVC), élastomères à base de silicone thermoplastiques, et une combinaison d'au moins deux de ces élastomères.

**2.** Utilisation selon la revendication 1, dans laquelle l'élastomère est un élastomère thermoplastique et a un intervalle de fusion (DSC, calorimétrie différentielle à balayage ; deuxième chauffage à une vitesse de chauffage de 5 K/min) de ≥ 20 °C à ≤ 240 °C, une dureté Shore A selon la norme DIN ISO 7619-1 de ≥ 40 à ≤ 98 et un indice de fluidité à chaud en volume (MVR) selon la norme ISO 1133 (190 °C, 10 kg) de ≥ 25 à ≤ 90 cm$^3$/10 min.

**3.** Utilisation selon la revendication 1, dans laquelle l'élastomère est un élastomère thermoplastique et a un intervalle de fusion (DSC, calorimétrie différentielle à balayage ; deuxième chauffage à une vitesse de chauffage de 5 K/min) de ≥ 20 °C à ≤ 200 °C, une dureté Shore A selon la norme DIN ISO 7619-1 de ≥ 40 à ≤ 98 et un indice de fluidité à chaud en volume (MVR) selon la norme ISO 1133 (190 °C, 10 kg) de ≥ 25 à ≤ 90 cm$^3$/10 min.

**4.** Utilisation selon la revendication 1, 2 ou 3, dans laquelle l'élastomère est un élastomère thermoplastique et a un intervalle de fusion (DSC, calorimétrie différentielle à balayage ; deuxième chauffage à une vitesse de chauffage de 5 K/min) de ≥ 20 °C à ≤ 200 °C,
une dureté Shore A selon la norme DIN ISO 7619-1 de ≥ 40 à ≤ 98,
un indice de fluidité à chaud en volume (MVR) à une température T selon la norme ISO 1133 (10 kg) de 5 à 15 cm$^3$/10 min et
une variation de l'indice de fluidité à chaud en volume (10 kg) dans le cas d'une augmentation de cette température T de 20 °C de ≤ 90 cm$^3$/10 min.

**5.** Utilisation selon l'une quelconque des revendications 1 à 4, dans laquelle l'élastomère est un élastomère de polyuréthane thermoplastique pouvant être obtenu à partir de la rédaction des constituants suivants :

a) au moins un diisocyanate organique
b) au moins un composé ayant des groupes réactifs avec les groupes isocyanate et ayant un poids moléculaire

moyen en nombre ($M_n$) de ≤ 500 g/mol à ≤ 6000 g/mol et une fonctionnalité moyenne en nombre de la totalité des constituants sous b) de ≥ 1,8 à ≤ 2,5

c) au moins un agent d'allongement de chaîne ayant un poids moléculaire (Mn) de 60-450 g/mol et une fonctionnalité moyenne en nombre de la totalité des agents d'allongement de chaîne sous c) de 1,8 à 2,5.

6. Utilisation selon la revendication 1, dans laquelle l'élastomère est un élastomère thermoplastique et a un intervalle de fusion (DSC, calorimétrie différentielle à balayage ; 2e chauffage à une vitesse de chauffage de 5 K/min) de ≥ 20 °C à ≤ 100 °C, et a une amplitude de viscosité complexe |$\eta$*| (déterminée par une mesure de viscosimétrie dans la masse fondue avec un viscosimètre à cisaillement par oscillation plaque/plaque à 100 °C et une vitesse de cisaillement de 1/s) de ≥ 10 Pas à ≤ 1 000 000 Pas.

7. Utilisation selon l'une quelconque des revendications 1 à 6, dans laquelle l'élastomère est un élastomère de polyuréthane thermoplastique pouvant être obtenu à partir de la réaction d'un constituant polyisocyanate et d'un constituant polyol, le constituant polyol comprenant un polyol de polyester ayant un point de non-écoulement (ASTM D5985) de ≥ 25 °C.

8. Utilisation selon l'une quelconque des revendications 1 à 7, dans laquelle le volume de vide (300) dans le corps poreux (10, 20) constitue ≥ 50 % à ≤ 99 % du volume du corps (10, 20).

9. Utilisation selon l'une quelconque des revendications 1 à 8, dans laquelle les nœuds (200) sont répartis dans le corps poreux (10, 20) à la manière d'une répétition périodique dans au moins une partie du volume du corps poreux (10, 20).

10. Utilisation selon l'une quelconque des revendications 1 à 9, dans laquelle le volume de vide (300) dans le corps poreux (10, 20) est formé sous la forme de premier (310), deuxième (320) et troisième (330) groupes de canaux mutuellement pénétrants, une multitude de canaux individuels (311, 321, 331) à l'intérieur de chaque groupe respectif de canaux courant parallèlement les uns aux autres et le premier groupe de canaux (310), le deuxième groupe de canaux (320) et le troisième groupe de canaux (330) s'étendant dans différentes directions spatiales.

11. Utilisation selon l'une quelconque des revendications 1 à 10, dans laquelle l'angle minimal moyen entre entretoises adjacentes (100) dans le corps poreux (10, 20) est ≥ 30° à ≤ 140°.

12. Utilisation selon l'une quelconque des revendications 1 à 11 dans laquelle, dans le corps poreux (10, 20), la densité spatiale des nœuds (200) dans une première région du corps (10, 20) est différente de la densité spatiale des nœuds (200) dans une deuxième région du corps (10, 20).

13. Utilisation selon l'une quelconque des revendications 1 à 12 dans laquelle, dans le corps poreux (10, 20), le matériau du corps (10, 20) dans une première région du corps (10, 20) est différent du matériau dans une deuxième région du corps (10, 20).

200
100
300
201

10

FIG. 1

200
100
300
201

10

FIG. 2

FIG. 3

FIG. 4

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102015100816 B3
- WO 2012028747 A1
- WO 2015197515 A1
- WO 2015120429 A1
- DE 2901774 A
- EP 0192946 A1

**Non-patent literature cited in the description**

- **MAITI, A. et al.** 3D printed cellular solid outperforms traditional stochastic foam in long-term mechanical response. *Sci. Rep.*, 2016, vol. 6, 24871
- Polyurethanes. **J. H. SAUNDERS ; K. C. FRISCH.** High Polymers. Interscience Publishers, 1962, vol. XVI
- **R. GÄCHTER ; H. MÜLLER.** Handbook of Plastics Additives. Hanser Verlag Munich, 1990